**Europäisches Patentamt**

**European Patent Office**

**Office européen des brevets**

(19)

(11) Numéro de publication: **0 206 886
B1**

(12)

# FASCICULE DE BREVET EUROPEEN

(45) Date de publication du fascicule du brevet:
**07.12.88**

(51) Int. Cl.⁴: **F 16 D 3/20,** F 16 D 3/06,
F 16 C 29/04

(21) Numéro de dépôt: **86401203.4**

(22) Date de dépôt: **04.06.86**

(54) **Joint de transmission homocinétique coulissant destiné aux véhicules automobiles.**

(30) Priorité: **14.06.85 FR 8509084**

(43) Date de publication de la demande:
**30.12.86 Bulletin 86/52**

(45) Mention de la délivrance du brevet:
**07.12.88 Bulletin 88/49**

(84) Etats contractants désignés:
**DE GB IT**

(56) Documents cités:
**DE-A- 1 903 600
FR-A- 1 585 469
FR-A- 2 506 872
FR-A- 2 512 140
FR-A- 2 525 306
FR-A- 2 554 528
FR-A- 2 554 532**

(73) Titulaire: **GLAENZER SPICER, 10 Rue J.P. Timbaud,
F-78301 Poissy (FR)**

(72) Inventeur: **Orain, Michel Alexandre, 10 rue des Côtes de
Vannes, F-78700 Conflans Sainte Honorine (FR)**

(74) Mandataire: **Moncheny, Michel et al, c/o Cabinet
Lavoix 2 Place d'Estienne d'Orves, F-75441 Paris
Cedex 09 (FR)**

ACTORUM AG

## Description

La présente invention a pour objet un joint de transmission homocinétique coulissant destiné aux véhicules automobiles.

Plus particulièrement, l'invention concerne les joints du type comprenant un tripode solidaire en rotation d'un arbre menant et pourvu de trois bras radiaux susceptibles de coulisser axialement sur des chemins de roulement plans, ménagés dans un barillet solidaire en rotation d'un arbre mené, des files d'aiguilles de roulement interposées entre les bras du tripode et les chemins de roulement, ainsi que des cages de maintien des files d'aiguilles. Les cages sont guidées latéralement par des rives parallèles délimitant les bords supérieur et inférieur des chemins de roulement, de telle manière que les cages demeurent exactement alignées parallèlement à l'axe général du chemin de roulement, lui-même parallèle à l'axe du barillet. De ce fait, les aiguilles, maintenues perpendiculaires par la cage à l'axe longitudinale celle-ci, roulent toujours exactement dans leur direction naturelle, c'est-à-dire sans glissement et sans engendrer d'efforts de frottements latéraux. Un tel joint est décrit dans le document FR-A-2 554 532, qui a été utilisé pour la délimitation de la revendication 1.

Or, afin de permettre le débattement angulaire de l'arbre menant, il est nécessaire de supprimer la rive de guidage intérieure près du bord du barillet, ce qui conduit à usiner dans ce dernier un chanfrein de fortes dimensions. Il en résulte qu'en fin de course d'élongation de l'arbre menant, la cage est mal guidée, et que des frottements indésirables apparaissent ainsi qu'une tendance au coincement.

L'invention a donc pour but de proposer un joint du type ci-dessus qui soit réalisé de façon à supprimer ces inconvénients.

Suivant l'invention comme définie dans la revendication 1, les cages comportent des organes saillants de guidage, agencés sur un seul côté de la cage qui est le côté situé vers l'extérieur du barillet et qui coulissent à l'intérieur d'une rigole unique longitudinale usinées sur le bord extérieur du chemin de roulement ou reconstituée par des organes annexes rapportés.

L'agencement de tels organes d'accrochage permet de supprimer la rive de guidage intérieure de la cage sur toute la longueur du barillet, lequel est alors alésé à un diamètre plus important, limité par la largeur efficace du chemin de roulement correspondant à la longueur de la partie cylindrique des aiguilles.

On conserve ainsi aux cages un excellent guidage, indépendamment du chanfrein nécessaire à l'obtention du coulissement maximum sous angle.

Suivant un premier mode de réalisation possible, les organes saillants d'accrochage sont constitués, pour chaque cage, par des socles ménagés aux extrémités ou au voisinage des extrémités de la cage.

D'autres particularités et avantages de l'invention apparaîtront au cours de la description qui va suivre, faite en référence aux dessins annexés qui en illustrent deux modes de réalisation à titre d'exemples non limitatifs:

— la figure 1 est une vue en coupe transversale avec élévation partielle d'un joint de transmission homocinétique coulissant du type visé par l'invention montrant sur sa partie droite l'état de la technique, et sur sa partie gauche un mode de réalisation des cages et du barillet selon l'invention;

— la figure 2 est une vue en coupe axiale avec élévation partielle du joint coulissant de la figure 1;

— la figure 3 est une vue partielle à échelle agrandie, suivant III-III de la figure 5 de la cage de retenue des aiguilles et du barillet correspondant à la partie gauche de la figure 1, suivant un premier mode de réalisation;

— la figure 4 est une vue en coupe suivant IV-IV de la figure 5 de la cage de retenue des aiguilles;

— la figure 5 est une vue en élévation longitudinale avec coupe partielle de la cage de la figure 4;

— la figure 6 est une vue en perspective à échelle agrandie de la cage des figures 3 à 5;

— la figure 7 est une vue analogue à la figure 4 d'une variante de réalisation de la cage selon l'invention;

— la figure 8 est une vue en coupe suivant VIII-VIII de la figure 1;

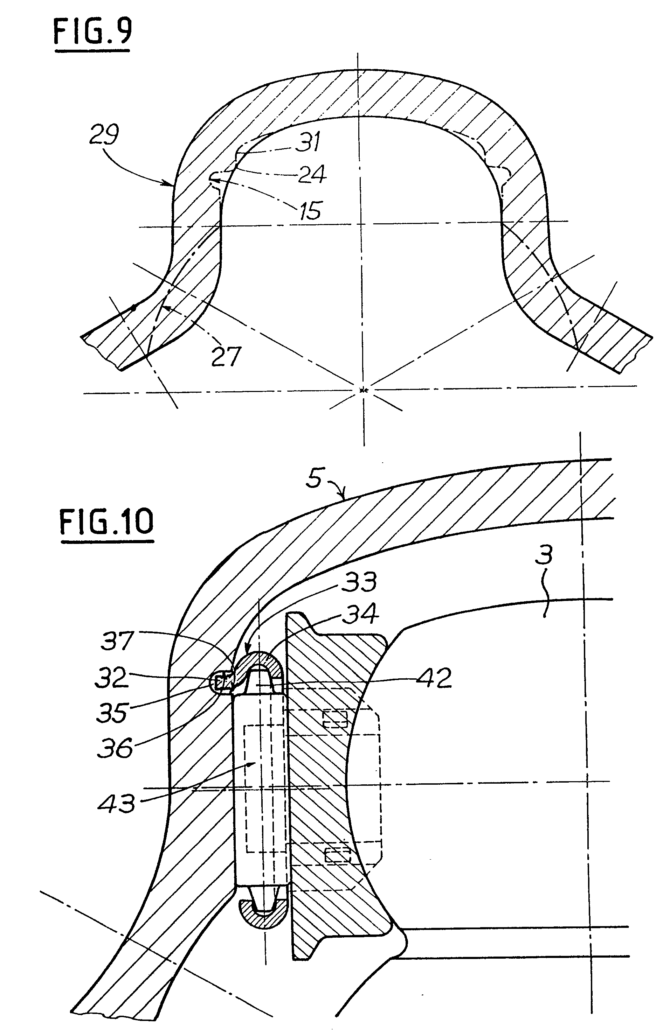

— la figure 9 est une vue en coupe transversale d'une ébauche tubulaire à partir de laquelle peut être fabriquée la cage prévue par l'invention;

— la figure 10 est une vue analogue à la figure 3 d'une troisième forme de réalisation de la cage;

— la figure 11 est une vue analogue à la figure 3 d'une quatrième forme de réalisation de la cage;

— la figure 12 est une vue en perspective de la cage de la figure 11;

— la figure 13 est une demi-vue en coupe transversale suivant XIII-XIII de la figure 14 d'une cinquième forme de réalisation du joint selon l'invention;

— la figure 14 est une vue en coupe axiale suivant XIV-XIV de la figure 13.

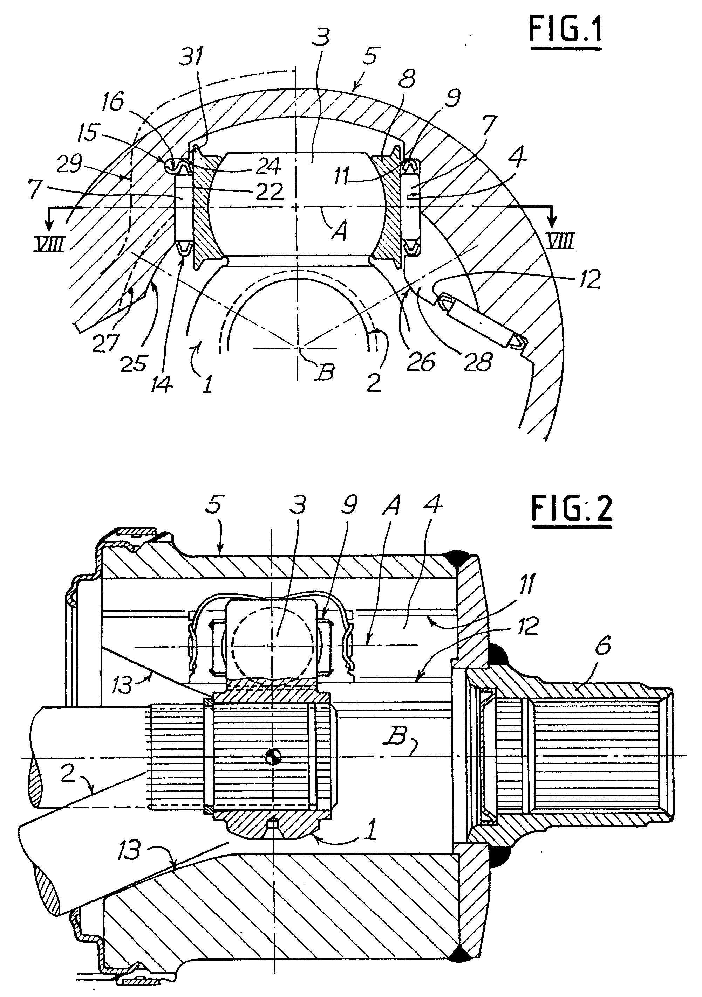

Le joint de transmission représenté aux figures 1, 2 et 8 est destiné aux véhicules automobiles, et comprend un tripode 1 solidaire en rotation d'un arbre menant 2 et pourvu de trois bras radiaux 3 susceptibles de coulisser axialement sur des chemins de roulement plans 4 ménagés dans un barillet 5 solidaire en rotation d'un arbre mené (non représenté). Des files d'aiguilles de roulement 7 et des coussinets ou godets 8 sont interposés entre les bras 3 et les chemins de roulement 4, et des cages 9 maintiennent les files d'aiguilles 7 sur les chemins 4. Ces derniers sont délimités chacun par deux rives longitudinales 11, 12 agencées de telle manière que les cages 9 demeurent exactement alignées parallèlement à l'axe général A du chemin de roulement 4, lui-même parallèle à l'axe B du barillet 5. De ce fait, les aiguilles 7 maintenues perpendiculaires par la cage 9 à l'axe longitudinal A, roulent toujours exactement dans leur direction naturelle, c'est-à-dire sans glissement et sans engendrer d'effort de frottement latéraux. Pour permettre un débattement angulaire maximum de l'arbre menant 2, un chanfrein 13 de grandes dimensions est usiné dans le barillet 5.

Suivant l'invention, les cages 14 comportent des organes saillants de guidage sur le barillet 5, qui viennent se loger dans des dégagements ou rigoles correspondants 15 formé dans le barillet 5, ces organes de guidage étant formés uniquement sur le côté de la cage 14 situé vers l'extérieur du barillet 5.

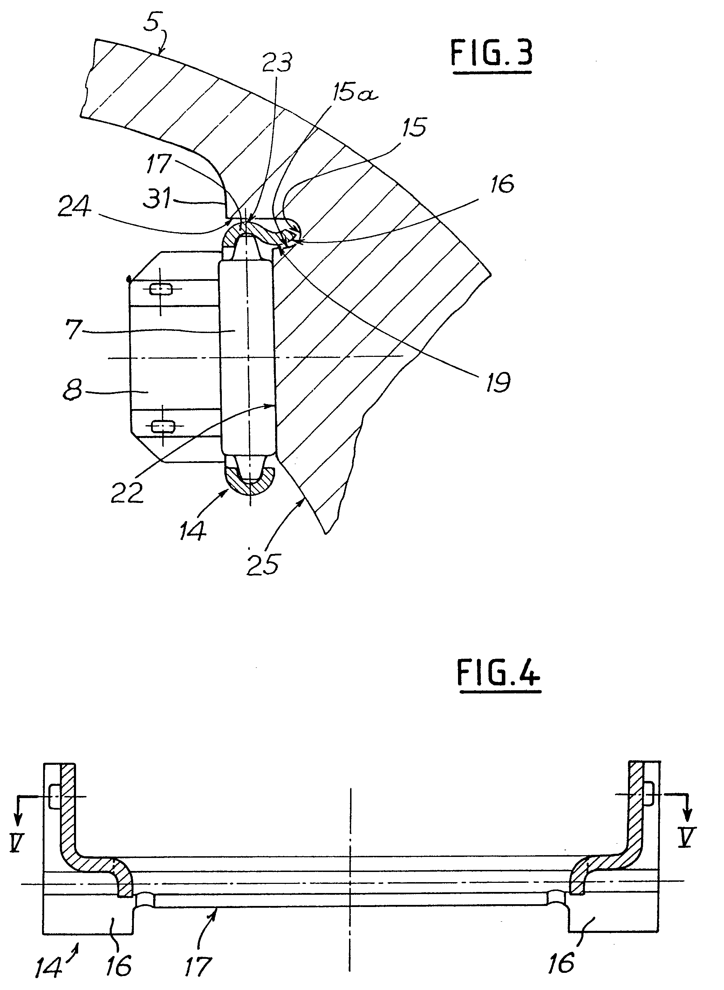

Dans le mode de réalisation illustré aux figures 3 à 5 et 8, ces organes saillants sont constitués, pour chaque cage 14, par des socs ou prolongements 16 ménagés aux extrémités du longeron extérieur 17 de la cage, ce longeron étant relié au longeron opposé par des traverses 18.

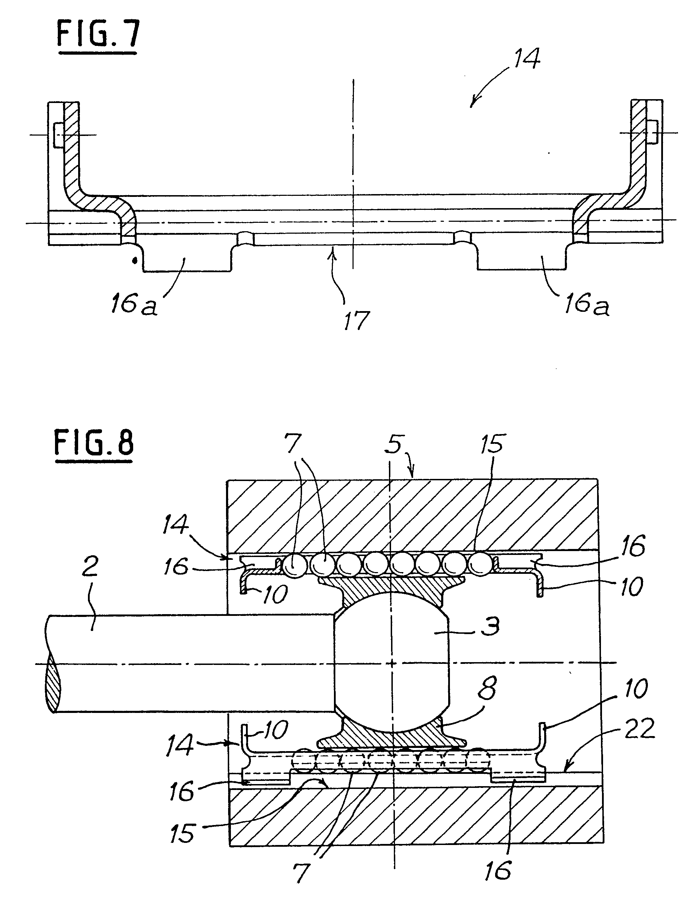

En variante (figure 7), les socs 16a sont agencés au voisinage des extrémités du longeron 17.

Pour chaque cage 14, ces organes saillants peuvent également être uniques et s'étendre sur toute la longueur de la cage. Les socs 16 ou les prolongements précités de chaque cage 14 sont incurvés, par exemple en forme de quart ou de demi-coude, et prennent appui par leur dos 19 sur un flanc intérieur 15a du dégagement 15, ce flanc intérieur débouchant sur le chemin de roulement correspondant 22. Au droit de chaque soc 16 ou 16a, le longeron correspondant 17 est raccordé au soc par un dos bombé 23 en appui glissant sur une rive 24 délimitant, avec le flanc intérieur 10, le dégagement 15 associé au chemin de roulement 22, le fond du dégagement 15 étant de préférence circulaire (figure 3).

La cage 14 est pourvue à ses extrémités, de bords transversaux repliés 10 qui servent de butées de fin de course à la cage, par contact avec les extrémités des godets 8 (figure 8).

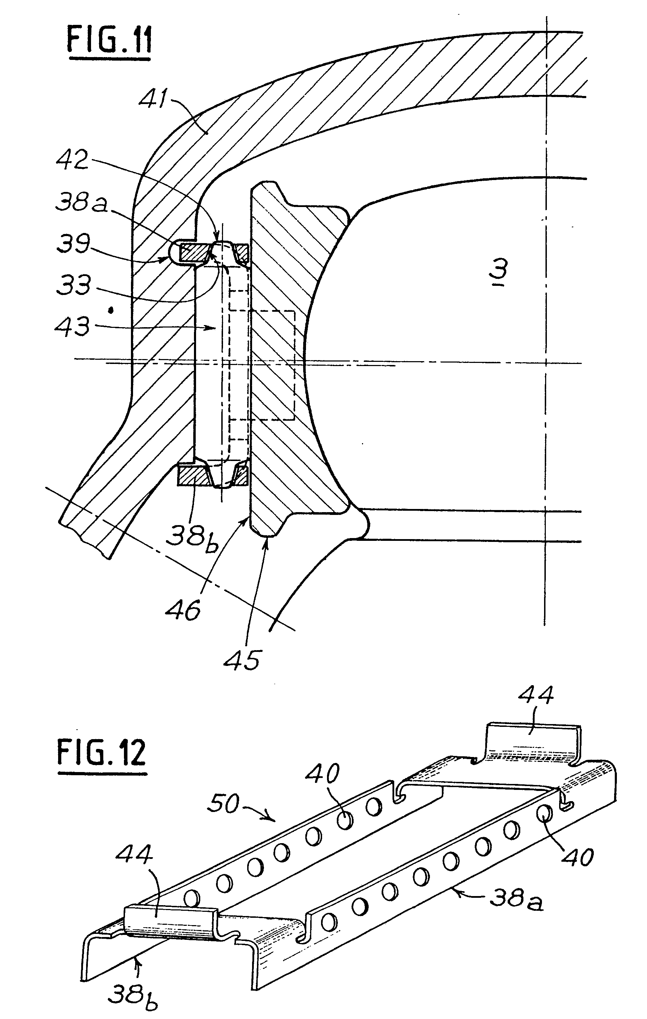

Les rives intérieures 12 du joint antérieur (figure 2) étant supprimées, le barillet 5 du joint selon l'invention présente un alésage 25 (figures 1 et 3) dont le diamètre est nettement supérieur à celui de l'alésage 26 (partie droite de la figure 1) nécessaire dans la technique antérieure, l'alésage 25 étant limité par la largeur efficace du chemin de roulement 22 correspondant à la longueur de la partie cylindrique des aiguilles 7. Le chanfrein 27 (partie gauche de la figure 11) ménagé en bout de barillet ne nuit évidemment en aucune manière au guidage des aiguilles 7. L'agencement de l'alésage 25 permet également de supprimer les parties saillantes fragiles 28 situées, dans l'état de la technique antérieure, entre les rives intérieures 12 de deux chemins de roulement contigus (partie droite de la figure 1).

Le joint homocinétique coulissant selon l'invention présente les avantages techniques suivants:

— l'agencement d'organes d'accrochage 16, 16a de retenue des cages 14 et de leurs aiguilles 7, ainsi que le logements 15 pour ces organes d'accrochage 16, 16a, permet de conserver un excellent guidage aux cages 14, indépendamment du chanfrein nécessaire à l'obtention du maximum de coulissement sous angle. Cette caractéristique essentielle de l'invention permet également une fabrication plus simple et moins onéreuse, tout en réduisant le poids du joint homocinétique, en particulier grâce à la suppression des parties fragiles 28;

— l'alésage agrandi 25 permet d'utiliser des ébauches forgées plus simples et plus légères que dans les joints antérieurs;

— la trempe superficielle à haute dureté des chemins de roulement 22, généralement effectuée après chauffe rapide par induction, ne pose plus de problème de tapures, la partie fragile 28 étant supprimée;

— enfin, il est possible d'obtenir une ébauche très approchée et simple du barillet 5, constituée par un tube profilé 29 (représenté à la figure 8). L'usinage consiste alors en un tronçonnage des profilés 29 à la longueur souhaitée, en un brochage assurant en même temps le profil du chemin de roulement 22, du dégagement 15, de la rive 24 et du plat 31 contigu à l'arête de la rive 24, et en un tournage du chanfrein intérieur 27 à l'extrémité du barillet 5.

On a ainsi simplifié l'usinage, effectué avec une broche plus simple et plus robuste, facilité la trempe superficielle des chemins de roulement 22, et réduit le poids de la matière utilisée tout en assurant un excellent guidage de la cage 14 jusqu'à la fin de la course d'élongation.

La figure 10 représente une variante de réalisation dans laquelle seules les parties terminales 32 des socs 33 sont engagées dans des dégagements du barillet 5, formés par des saignées 35 sur les flancs 36, 37 desquelles lesdites parties terminales 32 prennent appui, les dos 34 prolongeant celles-ci étant extérieurs aux saignées 35. Ainsi, les dos 34 ne sont plus utilisés pour le guidage de la cage, qui est assuré uniquement par les extrémités d'accrochage 32, tant en direction axiale qu'en translation vers l'intérieur et vers l'extérieur du barillet 5, sans nécessiter les rives 11 ou 24 du barillet 5 (figures 1 et 3).

Il en résulte une simplification du contour du barillet, qui permet un profil à épaisseur pratiquement constante, et de ce fait réalisation économique à partir d'une tôle d'acier emboutie ou roulée ou pliée.

Dans la forme de réalisation des figures 11 et 12, chaque cage 50 comporte des flancs 38a, 38b d'accrochage au barillet 5, dont l'un 38a pénètre dans une saignée correspondante 39 usinée ou formée à froid dans la paroi 14 du barillet. La saignée 39 assure le guidage latéral et axial de la cage 50, et les flancs longitudinaux 38a, 38b sont percés de trous coniques 40 dans lesquels viennent tourillonner les pointes 42 des aiguilles 43. La cage 50 est munie à ses extrémités, entre les flancs 38a, 38b, de bords repliés 44 servant de butées de limitation de la course de la cage, par contact avec les bords 45 de godets 46 interposés entre les aiguilles 43 et le bras associé 3.

La pénétration du flanc 38a dans la saignée 39 assure à la cage 50 un excellent guidage en translation latérale et dans la direction axiale. Les flancs 38a, 38b sont réalisés par pliage après découpe et perçage d'une tôle d'acier ébauche, opérations à l'issue desquelles on obtient la cage 50 visible à la figure 12.

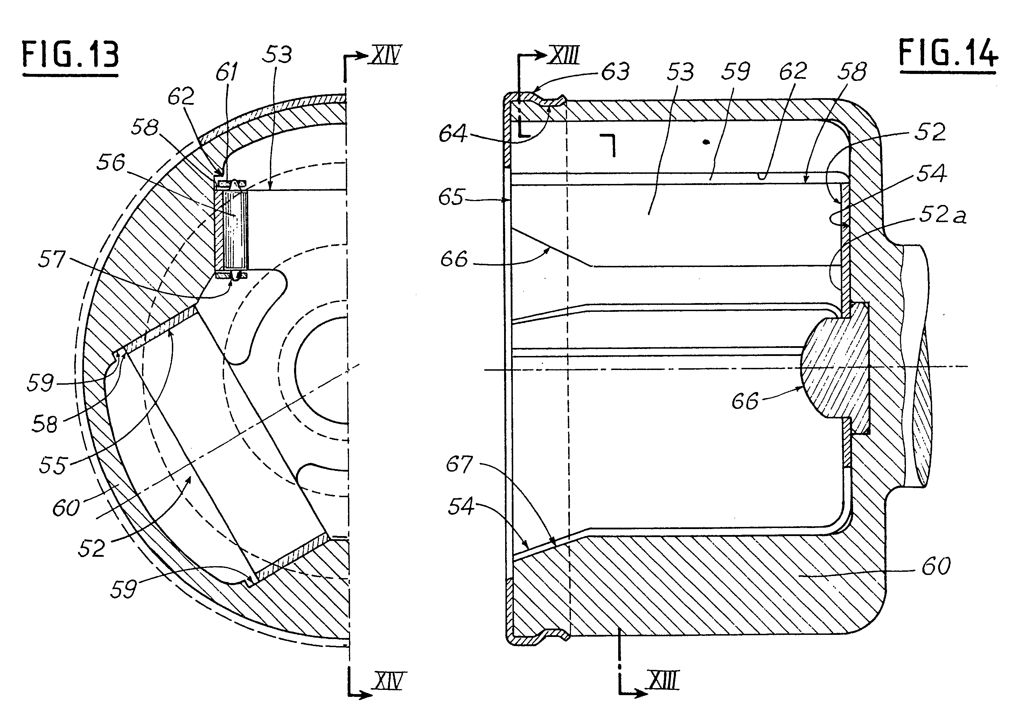

La cinquième forme est un exemple de réalisation de l'invention, illustrée aux figures 13 et 14: les rigoles longitudinales de guidage des cages ne sont plus usinées dans le barillet, mais reconstituées au moyen d'organes annexes rapportés au barillet.

Ainsi, l'invention prévoit ici in clips 52 en forme d'étoile à six pattes radiales 53, réalisé de préférence en tôle d'acier trempé, et ayant une base 52a qui s'appuie contre le fond 54 du barillet 60. Chaque patte 53 est en appui contre le barillet 60 et présente une face intérieure 55 formant un chemin de roulement pour les aiguilles 56 contenues dans les cages 57, tandis que les bords 58 des pattes 53 situés vers l'extérieur du barillet 60 constituent l'un des deux flancs de rigoles 59 de guidage recevant les organes de guidage 61 des cages 57, dont le second flanc 62, extérieur, est usiné dans le barillet 60.

Ainsi, la rigole ou glissière 59 de guidage unique, située sur le côté externe du chemin de roulement 55 est rapportée à l'intérieur du barillet 60.

Des moyens sont prévus pour retenir axialement le clips 52 au barillet 60: dans l'exemple décrit, ces moyens sont constitués par un capot 63 en tôle ou en matière plastique, qui enserre le bord libre du barillet 60 sur lequel il est serti ou encliqueté en 64, et remplit en fait une double fonction. En effet d'une part il empêche le déboîtement intempestif de l'équipage mobile (non représenté) réalisé de manière connue en soi, et d'autre part il retient axialement le clips 52 par contact sur les extrémités 65 de ses six pattes 53. La base 52a du clips 52 peut être ajourée pour guider et maintenir une butée élastique 66 de fin de course de compression de l'arbre (non représenté).

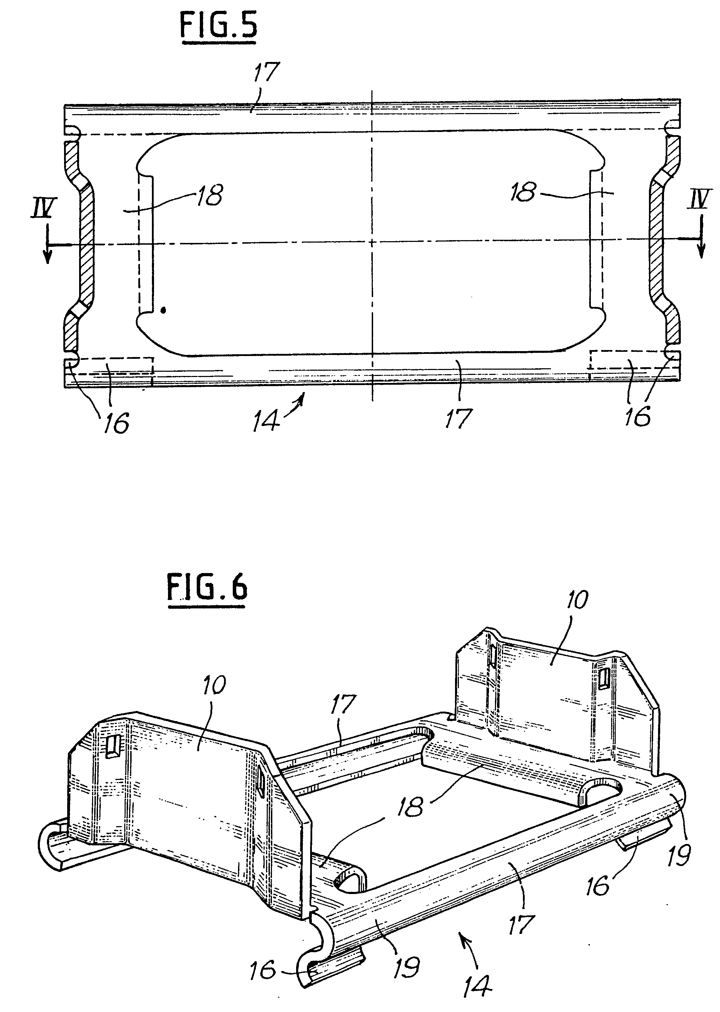

La cage 57, dont le flanc extérieur 61 est guidé par la rigole 59, est du type dans lequel les aiguilles 56 tourillonnent individuellement dans les trous 40 percés dans ses deux longerons (cage 50 de la figure 12), mais peut être évidemment remplacée par une cage du type à socs telle que la cage 14 (figure 6). Les extrémités des pattes 53 opposées au fond 52a sont tronquées suivant des biseaux 66 pour ne pas déborder du cône du chanfrein 67 du barillet 60, lui-même prévu pour accroître l'angle et la longueur de coulissement du joint.

Malgré le chanfrein 67, lorsque le joint est en position d'extension maximum, les cages 57 ou 14 d'aiguilles sont guidées positivement par les glissières ou rigoles 59 situées sur le côté extérieur du chemin de roulement 55, cette rigole ou glissière unique pour chaque cage 57, 14 se prolongeant jusqu'au bord du barillet 5, 60.

## Revendications

1. Joint de transmission coulissant, destiné aux véhicules automobiles, comprenant un tripode (1) solidaire en rotation d'un arbre menant (2) et pourvu de trous bras radiaux (3) susceptibles de coulisser axialement sur des chemins de roulement plans (22) ménagés dans un barillet (5) solidaire en rotation d'un arbre mené, des files d'aiguilles de roulement (7) interposées entre les bras (3) du tripode (1) et les chemins de roulement (22), ainsi que des cages (14) de maintien les files d'aiguilles (7), lesdits cages sont latéralement guidés par des moyens de guidage prévus entre les cages et les chemins de roulement plans, caractérisé en ce que les cages (14, 50) comportent des organes saillants (16, 16a, 32) de guidage, agencés sur un seul côté de la cage (14, 50) qui est le côté situé vers l'extérieur du barillet (5) et qui coulissent à l'intérieur d'une rigole unique longitudinale (15, 35, 59) usinée sur le bord extérieur du chemin de roulement (22) ou reconstituée par des organes annexes rapportés (52, 53).

2. Joint selon la revendication 1, caractérisé en ce que les organes saillants d'accrochage sont constitués, pour chaque cage, par des socs (16) ménagés aux extrémités ou au voisinage (16a) des extrémités d'un côté de la cage (14).

3. Joint selon la revendication 1, caractérisé en ce que les organes saillants sont constitués, pour chaque cage, par un prolongement s'étendant sur toute la longueur de la cage (14).

4. Joint selon l'une des revendications 2 et 3, caractérisé en ce que les socs (16, 16a) et le prolongement de chaque cage (14) sont incurvés, par exemple en forme de quart ou de demi-coude, et prennent appui par leur dos (19) sur un flanc intérieur (10) des dégagements (15) constituant les rigoles précitées.

5. Joint selon la revendication 4, caractérisé en ce que chaque cage (14) comprend un longeron (17) raccordé aux socs (16, 16a) ou audit prolongement et qui présente un dos (23) bombé en appui glissant sur une rive (24) du chemin de roulement associé (22).

6. Joint selon la revendication 2, caractérisé en ce que seules les parties terminales (32) des socs (33) sont engagées dans des dégagments du barillet (5), formés par des saignées (35) sur les flancs (36, 37) desquelles lesdites parties terminales (32) prennent appui, les dos (34) prolongeant celles-ci étant extérieurs aux saignées (35).

7. Joint selon la revendication 1, caractérisé en ce que chaque cage (50) comporte des flancs (38a, 38b) d'accrochage au barillet (5) dont l'un (38a) pénètre dans une saignée correspondante (39) usinée dans la paroi (41) du barillet, et assurant le guidage latérale axial de la cage (50), et ces flancs (38a, 38b) sont percés de trous (40) agencés pour recevoir les pointes (42) des aiguilles (43), et la cage (50) est munie de bords repliés (44) servant de butées de limitation de la course de la cage par contact avec les bords (45) de godets (46) interposés entre les aiguilles (43) et le bras associé (3).

8. Joint selon la revendication 1, caractérisé en ce qu'il comprend un clips (52) en forme d'étoile à six pattes radiales (53) et ayant une base (52a) qui s'appuie contre le fond (54) du barillet (60), chaque patte (53) étant en appui contre le barillet et présentant une face (55) formant chemin de roulement pour les aiguilles (56) contenues dans les cages (57) tandis que le bord (58) de cette patte (53) situé vers l'extérieur du barillet constitue l'un des deux flancs d'une rigole (59) de guidage recevant les organes de guidage (61) de la cage, dont le second flanc (62) est usiné dans le barillet (60).

9. Joint selon la revendication 8, caractérisé en ce que des moyens sont prévus pour retenir axialement le clips (52) du barillet (60), par exemple un capot (63) serti ou encliqueté sur le bord libre du barillet (60) et en appui sur les extrémités des pattes (53) du clips (52), lesquelles sont tronquées en biseaux (66) afin de ne pas déborder du cône d'un chanfrein (67) ménagé dans le barillet (60) pour accroître l'angle et la longueur de coulissement du joint.

## Patentansprüche

1. Schiebegelenk für Kraftfahrzeuge, umfassend eine Tripode (1), die drehfest mit einer Antriebswelle (2) verbunden ist und mit drei radialen Armen (3) versehen ist, die axial auf ebenen Laufbahnen (22) gleiten, wobei diese Laufbahnen in einer drehfest mit einer Antriebswelle verbundenen Trommel (5) angeordnet sind, sowie Lagernadelreihen (7) zwischen den Armen (3) der Tripode (1) und den Laufbahnen (22) und Käfige (14), die die Lagernadelreihen (7) halten, wobei die Käfige seitlich durch Führungsmittel geführt sind, die zwischen den Käfigen und den Laufbahnen vorgesehen sind, dadurch gekennzeichnet, dass die Käfige (14, 50) vorstehende Führungsorgane (16, 16a, 32) aufweisen, die an einer Seite des Käfigs (14, 50), die zum Äusseren der Trommel (5) hin gerichtet ist, angeordnet sind und die in einer einzelnen Längsnut (15, 35, 59) gleiten, die am Aussenrand der Laufbahn (22) eingelassen ist oder aus aufgesetzten zugehörigen Organen (52, 53) gebildet wird.

2. Gelenk gemäss Anspruch 1, dadurch gekennzeichnet, dass die vorstehenden Befestigungsorgane für jeden Käfig aus Zähnen (16) gebildet werden, die an den Enden oder in unmittelbarer Nähe (16a) der Enden an einer Seite des Käfigs (14) angeordnet sind.

3. Gelenk gemäss Anspruch 1, dadurch gekennzeichnet, dass die vorstehenden Organe für jeden Käfig aus einer Verlängerung bestehen, die sich über die gesamte Länge des Käfigs (14) erstreckt.

4. Gelenk gemäss einem der Ansprüche 2 und 3, dadurch gekennzeichnet, dass die Zähne (16, 16a) und die Verlängerung jeden Käfigs (14) zum Beispiel nach innen in Form einer Viertel- oder Halbkrümmung gebogen sind und mit ihrem Rücken auf einer unteren Flanke (10) der Aussparungen (16) aufliegen, die die vorgenannten Nuten darstellen.

5. Gelenk gemäss Anspruch 4, dadurch gekennzeichnet, dass jeder Käfig (14) einen Längsträger (17) umfasst, der mit den Zähnen (16, 16a) oder mit der besagten Verlängerung verbunden ist und einen gewölbten Rücken (23) aufweist, der an einer Kante (24) der zugeordneten Laufbahn (22) gleitet.

6. Gelenk gemäss Anspruch 2, dadurch gekennzeichnet, dass nur die Endteile (32) der Zähne (33) in die Aussparungen der Trommel (5) eingreifen, wobei diese Aussparungen durch Einschnitte (35) in den Flanken (36, 37) gebildet werden, auf denen die besagten Endteile (32) aufliegen und der Rücken (34) zur Verlängerung dieser Teile ausserhalb der Einschnitte (35) liegt.

7. Gelenk gemäss Anspruch 1, dadurch gekennzeichnet, dass jeder Käfig (59) Flanken (38a, 38b) zur Befestigung gegenüber der Trommel (5) aufweist, wobei eine (38a) dieser Flanken in einen entsprechenden Einschnitt (39) in der Wand (41) der Trommel eingreift und für eine axiale Seitenführung des Käfigs (50) sorgt und wobei diese Flanken (38a, 38b) mit Köchern (40) zur Aufnahme der Spitzen (42) der Nadeln (43) versehen sind und der Käfig (50) gebördelte Kanten (44) aufweist, die als Anschlag für den Weg des Käfigs durch Kontakt mit den Kanten (45) von Schalen (46), die zwischen den Nadeln (43) und dem zugehörigen Arm (39) angeordnet sind, dienen.

8. Gelenk gemäss Anspruch 1, dadurch gekennzeichnet, dass das Gelenk eine sternförmige Klemmplatte (52) mit sechs radialen Laschen (53) und einem Boden (52a) umfasst, der an dem Boden (54) der Trommel anliegt und eine Fläche (55) aufweist, die eine Laufbahn für die in den Käfigen (57) enthaltenen Nadeln (56) bildet, während der zum Äusseren der Trommel gerichtete Rand (58) dieser Lasche (53) eine der beiden Flanken einer Führungsnut (59) bildet, die die Führungsorgane (61) des Käfigs aufnimmt, wobei die zweite Flanke (62) in der Trommel (60) eingearbeitet ist.

9. Gelenk gemäss Anspruch 8, dadurch gekennzeichnet, dass Mittel vorgesehen sind, um die Klemmplatte (52) axial an der Trommel (60) zu halten, zum Beispiel eine gebördelte oder am freien Rand der Trommel (60) befestigte Kappe (63), die auf den Enden der Laschen (53) der Klemmplatte (52) aufliegt, die kegelstumpfartig abgeschrägt sind (66), um nicht über den Kegel einer Abfasung (67) hinauszuragen, die in der Trommel (60) zur Vergrösserung des Winkels und des Schiebewegs des Gelenks vorgesehen ist.

## Claims

1. A sliding transmission joint for automotive vehicles, comprising a tripod (1) rotatably connected to an input shaft (2) and having three radial arms (3) adapted to slide axially on flat runways (22) formed in a barrel (5) rotatably connected to an output shaft; files of bearing needles (7) interposed between the arms (3) of the tripod (1) and the runways (22); and cages (14) which retain the files of needles (7) and are laterally guided by guide means disposed between the cages and the flat runways, characterized in that the cages (14, 50) comprise projecting guide members (16, 16a, 32) devised on one side only of the cage (14, 50), namely the side disposed towards the outside of the barrel (5), and sliding inside a single longitudinal groove (15, 35, 59) with which the outer edge of the runway (22) is formed by machining or which is reconstituted by adjoining members brought together (52, 53).

2. A joint according to claim 1, characterized in that for each cage the projecting attaching members are formed by blades (16) provided at the ends or in the vicinity (16a) of the ends of one side of the cage (14).

3. A joint according to claim 1, characterized in that for each cage the projecting members are formed by a prolongation extending over the whole length of the cage (14).

4. A joint according to one of claims 2 and 3, characterized in that the blades (16, 16a) and the prolongation of each cage (14) are inwardly curved, for example, in the form of a quarter or half bend and bear via their backs (19) against an inside flank (10) of the passages (15) forming the aforementioned grooves.

5. A joint according to claim 4, characterized in that each cage (14) comprises a longitudinal member (17) which is connected to the blades (16, 16a) or to the said prolongation and has a crowned back (23) bearing slidably against one side (24) of the associated runway (22).

6. A joint according to claim 2, characterized in that only the end portions (32) of the blades (33) engage in passages in the barrel (5) which are formed by grooves (35) against whose flanks (36, 37) such end portions (32) bear, the backs (34) continuing the end portions being outside the grooves (35).

7. A joint according to claim 1, characterized in that each cage (50) comprises flanks (38a, 38b) for attachment to the barrel (5), one of which (38a) enters a matching groove (39) machined in the barrel wall (41), ensuring the axial lateral guiding of the cage (50), and the flanks (38a, 38b) are formed with holes (40) adapted to receive the points (42) of the needles (43), and the cage (50) has folded edges (44) acting as abutments limiting the travel of the cage by contact with the edges (45) of small cups (46) interposed between the needles (43) and the associated arm (3).

8. A joint according to claim 1, characterized in that it comprises a clip (52) in the form of a star having six radial arms (53) and a base (52a) which bears against the end (54) of the barrel (60), each arm (53) bearing against the barrel and having a face (55) forming a runway for the needles (56) contained in the cages (57), while the edge (58) of such arm (53) disposed towards the outside of the barrel forms one of the two flanks of a guide groove (59) which receives the cage guiding member (61) and whose second flank (62) is machined in the barrel (60).

9. A joint according to claim 8, characterized in that means are provided for retaining the clip (52) axially on the barrel (60), for example, a cap (63) crimped or locked on to the free edge of the barrel (60) and bearing against the ends of the arms (53) of the clip (52), such ends being truncated in bevels (66) so as not to extend beyond the cone of a chamfer (67) produced in the barrel (60), to increase the angle and length of sliding of the joint.

FIG.1

FIG.2

FIG.3

FIG.4

## FIG.5

## FIG.6

EP 0 206 886 B1

## FIG.7

## FIG.8

# FIG.9

# FIG.10

FIG.11

41

42

38a

39

33

43

3

38b

46

45

FIG.12

44

40

50

44

40

38a

38b

EP 0 206 886 B1

FIG.14

FIG.13

19